(19) Europäisches Patentamt

European Patent Office

Office européen des brevets

(11) **EP 1 516 221 B1**

(12) **EUROPÄISCHE PATENTSCHRIFT**

(45) Veröffentlichungstag und Bekanntmachung des Hinweises auf die Patenterteilung:
**15.03.2006 Patentblatt 2006/11**

(21) Anmeldenummer: **03737934.4**

(22) Anmeldetag: **07.06.2003**

(51) Int Cl.:
*G02B 26/10* *(2006.01)*     *G02B 26/08* *(2006.01)*

(86) Internationale Anmeldenummer:
**PCT/DE2003/001893**

(87) Internationale Veröffentlichungsnummer:
**WO 2004/003626 (08.01.2004 Gazette 2004/02)**

(54) **EINRICHTUNG UND VERFAHREN ZUR LASERSTRAHLABLENKUNG FÜR OPTISCHE MESSSYSTEME**

DEVICE AND METHOD FOR THE DEFLECTION OF A LASER BEAM FOR OPTICAL MEASURING SYSTEMS

DISPOSITIF ET PROCEDE POUR DEVIER DES FAISCEAUX LASER, DESTINES A DES SYSTEMES OPTIQUES DE MESURE

(84) Benannte Vertragsstaaten:
**AT BE BG CH CY CZ DE DK EE ES FI FR GB GR HU IE IT LI LU MC NL PT RO SE SI SK TR**

(30) Priorität: **27.06.2002 DE 10228899**

(43) Veröffentlichungstag der Anmeldung:
**23.03.2005 Patentblatt 2005/12**

(73) Patentinhaber: **EADS Deutschland GmbH
85521 Ottobrunn (DE)**

(72) Erfinder:
• **REHM, Wolfgang
  88138 Hergensweiler (DE)**
• **REITHMEIER, Günter
  85640 Putzbrunn (DE)**
• **ZELLER, Paul
  81827 München (DE)**

(56) Entgegenhaltungen:
WO-A-97/06462          GB-A- 2 250 884
US-A- 5 170 278        US-A- 6 070 813

**Beschreibung**

Die Erfindung betrifft eine Einrichtung zur Laserstrahlablenkung für optische Messsysteme gemäß dem Oberbegriff von Patentanspruch 1, sowie ein Verfahren zur Laserstrahlablenkung gemäß dem Oberbegriff von Patentanspruch 12.

Messsysteme, die mit Laserstrahlen arbeiten, finden in verschiedenen Bereichen der Technik Anwendung. Ein besonderes Beispiel für derartige optische Messsysteme sind Luftdatensysteme, welche die Eigenschaften der Luft in einem gewissen Abstand In exakt definierten Messrichtungen erfassen und auswerten. Beispielsweise kann damit die Geschwindigkeit der Luftbewegung in allen drei Raumachsen, Lufttemperatur und Luftdruck gemessen werden. Die Luftdatensysteme können z.B. in einem Flugzeug oder Hubschrauber, einem Landfahrzeug, einem Satelliten oder auch stationär am Boden vorgesehen sein. Besondere Anwendung finden derartige Luftdatensysteme in der Luftfahrt, um z.B. in einem Flugzeug rechtzeitig Turbulenzen und andere wichtige Luftparameter erkennen zu können und entsprechende Steuerungen einzuleiten.

Um den Laserstrahl in verschiedene Raumrichtungen zu lenken, werden in den bekannten Messsystemen zB. Scanner eingesetzt, die den Laserstrahl entlang einer Kreisbahn führen.

In der Zeitschrift SPIE, Vol. 2956, Februar 1997, S. 76 ist ein Doppler Lidar zur Messung beschrieben, bei dem mit einem gepulsten Lichtstrahl und einem Scanmechanismus die Geschwindigkeitskomponenten der Luft gemessen werden. Durch den Scanmechanismus wird der Strahl über die verschiedenen Messpunkte geführt.

In Applied Optics, Vol. 33, Nr. 27, S. 6467 aus dem Jahr 1994 wird ein Scanner für ein Luftdatenmesssystem beschrieben, bei dem ein rotierender Spiegel einen Laserstrahl ablenkt. Über feststehende Spiegel wird der abgelenkte Strahl durch ein Fenster des Messsystems nach außen geführt, um die Messdaten zu erfassen.

Die Druckschrift WO 97/06462 zeigt ein optisches System, bei dem ein rotierendes optisches Element einen Laserstrahl seitlich versetzt und auf eine Kreisbahn bringt.

In dem Dokument US 6,070,813 ist ein Verfahren zur Herstellung eines Gehäuses für Kraftstoffeinspritzeinrichtungen beschrieben. Dabei wird ein Laserstrahl mittels einer Optik seitlich von seiner Achse versetzt, wobei der versetzte Laserstrahl auf eine Linse trifft, durch die er fokussiert wird.

Das Dokument GB 2 250 884 A zeigt einen Scanner, bei dem ein Laserstrahl mit kontinuierlich variierenden keilförmigen Segmenten in verschiedene Richtungen abgelenkt wird.

In der Druckschrift GB 1 238 783 A ist eine Einrichtung zur Lichtstrahlabteilung beschrieben, bei der ein einfallender Lichtstrahl durch eine rotierende Scheibe in verschiedene Richtungen abgelenkt wird.

Schließlich zeigt die Druckschrift WO 99/54082 ein Verfahren zum Ablenken eines Laserstrahls zur Materialbearbeitung, bei dem eine keilförmige Platte rotiert, um einen im Zentrum auftreffenden Laserstrahl in einer Kreisbahn zu führen.

Bei den bekannten Laserstrahl-Umlenkeinrichtungen für Messsysteme besteht das Problem, dass die Pulswiederholfrequenzen nach oben hin begrenzt sind. Die bekannten Systeme sind nur für Dauerstrichlaser oder für Laser mit geringen Pulswiederholraten geeignet, da die mögliche Pulsfrequenz von der Scangeschwindigkeit abhängt Außerdem ist eine Synchronisation bzw. Triggerung eines jeden Laserpulses nötig. Hinzu kommt, dass die optischen Verluste möglichst gering gehalten werden sollen, und gleichzeitig hohe Leistungsdichten vorliegen sollen.

Aufgabe der Erfindung ist es, eine Einrichtung und ein Verfahren zur Laserstrahlablenkung für optische Messsysteme anzugeben, welche für den Betrieb mit extrem leistungsstarken Lasern, wie beispielsweise Pulslasern mit hohen Leistungs- und Energiedichten sowie hohen Pulswiederholraten, geeignet sind und darüber hinaus geringe optische Verluste aufweisen.

Diese Aufgabe wird gelöst durch die Einrichtung zur Laserstrahlablenkung für optische Messsysteme gemäß Patentanspruch 1, durch das Verfahren zur Laserstrahlablenkung in optischen Messsystemen gemäß Patentanspruch 12. Weitere vorteilhafte Merkmale, Aspekte und Details der Erfindung ergeben sich aus den abhängigen Ansprachen, der Beschreibung und den Zeichnungen.

Die erfindungsgemäße Einrichtung zur Laserstrahleinrichtung umfasst ein optisches Element zur Ablenkung eines einfallenden Laserstrahls und eine Antriebseinheit zur Erzeugung einer Rotationsbewegung zwischen dem optischen Element und dem einfallenden Laserstrahl, um den Laserstrahl in verschiedene aufeinanderfolgende Richtungen abzulenken, wobei das optische Element mindestens zwei Segmente zur Ablenkung des einfallenden Laserstrahls um jeweils einen festen Ablenkwinkel umfasst und der Laserstrahl bei der Rotationsbewegung nacheinander auf die mindestens zwei Segmente trifft.

Weiterhin umfasst die erfindungsgemäße Einrichtung eine rotierbare Umlenkeinheit, die dem optischen Element in Strahlrichtung vorgeschaltet und an das Antriebselement gekoppelt ist, um den Laserstrahl vor dem Auftreffen auf das optische Element seitlich zu versetzen bzw in eine Kreisbahn mit paralleler Strahlachse zu bringen. D.h., die Rotationsbewegung zwischen dem optischen Element und dem einfallenden Laserstrahl wird durch die Drehbewegung der Umlenkeinheit erzeugt Bevorzugt ist das optische Element feststehend ausgebildet bzw. fixiert.

Dadurch ergibt sich, dass während einer definierten Zeitdauer immer ein exakt gleicher Ablenkwinkel im Raum geliefert wird und während dieser Zeit keine Winkelbewegung erfolgt. D.h., dass während der Zeitdauer, in der der Laserstrahl auf ein Segment trifft, die Richtung des abgelenkten Laserstrahls im Raum konstant ist. Trifft der Laserstrahl auf das nächste Segment, erfolgt eine Richtungsänderung des abgelenkten Laserstrahls, wobei die neue Richtung im Raum wiederum konstant ist, während der Laserstrahl durch das entsprechende Segment abgelenkt wird. Dies erklärt sich dadurch, dass der Laserstrahl beim Überstreichen eines Segments stets den gleichen Einfallswinkel auf die Segmentoberfläche aufweist Deshalb bleibt auch der Austrittswinkel bei diesem Segment konstant.

Dadurch kann bei der Messung insbesondere eine hohe Pulsrate erzielt werden, d.h. es können Pulslaser mit beliebig hohen Pulswiederholraten verwendet werden. Somit können extrem leistungsstarke Laser, beispielsweise Pulslaser mit hohen Leistungs- und Energiedichten, in optischen Messsystemen eingesetzt werden. Darüberhinaus wird ein sehr hoher Wirkungsgrad erzielt da die optischen Verluste mit der erfindungsgemäßen Einrichtung extrem gering sind. Es ergibt sich weiterhin eine sehr hohe Richtungsgenauigkeit und Richtungsstabilität des abgelenkten Laserstrahls sowie eine weitgehende Temperaturunabhängigkeit. Die erfindungsgemäße Einrichtung kann sehr stabil gegenüber Vibrationen, Erschütterungen und Beschleunigungen aufgebaut werden und ist darüber hinaus sehr kompakt mit einem geringen Volumen, was für Anwendungen in der Luft- und Raumfahrt besonders vorteilhaft ist.

Die erfindungsgemäße Einrichtung kann nahezu verschleißfrei bzw. mit einer hohen Lebensdauer der Lager realisiert werden und sie besteht nur aus wenigen Bauteilen, weshalb sie besonders kostengünstig ist.

Darüberhinaus können mit nur einem Laser mehrere Messpositionen, deren Anzahl z.B. zwischen 2 und etwa 100 liegen, nahezu zeitgleich erfasst werden. Dabei kann die Abtastfrequenz der einzelnen Messpositionen mehrere hundert Hertz betragen. Totzeiten, bei denen die Einheit auf Grund von Schaltvorgängen aussetzt, werden vermieden.

Vorteilhafterweise ist das optische Element derart angeordnet, dass der einfallende Laserstrahl bei der Rotationsbewegung auf der Oberfläche des optischen Elements eine Kreisbahn ausführt.

Das optische Element ist vorzugsweise scheiben- oder ringförmig ausgestaltet und die einzelnen Segmente des optischen Elements sind bevorzugt keilförmig ausgebildet, wobei der Keilwinkel jedes Segments dessen Ablenkwinkel definiert.

Vorteilhafterweise haben die Segmente des optischen Elements Oberflächen, die gegenüber der Strahlachse des einfallenden Laserstrahls geneigt sind, wobei die Neigungswinkel der Oberfläche jedes Segments zusammen mit der Brechzahl des optischen Materials dessen Ablenkwinkel definiert. Insbesondere behält während des Auftreffens des Laserstrahls auf ein Segment der abgelenkte Laserstrahl eine konstante Richtung im Raum.

Bevorzugt sind die Segmente derart gestaltet, dass der einfallende Laserstrahl zur Rotationsachse bzw. Symmetrieachse hin abgelenkt wird. Dadurch kann das Fenster, aus dem der Laserstrahl bei einem entsprechenden optischen Messsystem austritt, besonders klein gehalten werden. Es ist aber auch möglich, dass die Segmente den einfallenden Laserstrahl von der Rotationsachse weg ablenken.

Beispielsweise sind die Segmente derart gestaltet, dass der jeweils einfallende Laserstrahl von jedem Segment in eine andere definierte Richtung abgelenkt wird. Es können aber auch mehrere Segmente gleich ausgestaltet sein, um während der Rotationsbewegung den Laserstrahl mehrmals in ein und dieselbe definierte Richtung abzulenken.

Vorteilhaft ist zwischen zwei aneinandergrenzenden Segmenten ein Übergangsbereich vorhanden, der eine Richtungsänderung des Laserstrahls ohne Strahlunterbrechung ermöglicht. Dadurch kann bei der Messung ein Überblenden von einem Messpunkt bzw. einer Messrichtung zu einem anderen Messpunkt bzw. einer anderen Messrichtung erfolgen.

Besonders vorteilhaft ist es, wenn das optische Element an einer Seite, beispielsweise an der Rückseite, sphärisch oder asphärisch ausgebildet ist bzw. ein sphärisch oder asphärisch ausgebildetes Flächenelement mit einer positiven Brennweite aufweist. Dadurch kann ein Versatz des auf das optische Element einfallenden Laserstrahls während der Kreisbewegung des Laserstrahls an einem gewünschten Messpunkt korrigiert werden, so dass die Lage der Messposition besonders genau eingehalten werden kann.

Bevorzugt ist das optische Element in einem Teilbereich, der nicht zur Strahlablenkung genutzt wird, abgeflacht bzw. als ebene Fläche ausgebildet, oder es weist in dem Teilbereich eine Aussparung auf. Dadurch kann eine weitere Gewichtsreduzierung und Miniaturisierung der Einrichtung erreicht werden.

Das optische Element ist bevorzugt transparent, wobei der jeweilige Ablenkwinkel durch Lichtbrechung in Segmenten erzeugt wird. Es ist aber auch möglich, das optische Element reflektierend auszugestalten, wobei der jeweilige Ablenkwinkel durch Reflexion an den Segmenten bzw. Segmentoberflächen erzeugt wird.

Die Verweildauer des abgelenkten Laserstrahls in einer definierten Raumrichtung kann in Abhängigkeit vom Winkelbereich des jeweiligen Segments und der Rotationsfrequenz bestimmt werden. Dadurch ergibt sich eine besonders hohe Flexibilität hinsichtlich der Art und Weise der Messung.

Bevorzugt weisen die Segmente an einer Seite eine sphärische oder asphärische Oberfläche auf. Dadurch kann eine Korrektur eines parallelen Strahlversatzes erreicht werden.

Bevorzugt sind die Segmente derart gestaltet, dass die Strahlablenkung zur Rotationsachse hin erfolgt Dadurch kann das Austrittsfenster für den Laserstrahl besonders klein gehalten werden.

Vorteilhafterweise ist das erfindungsgemäße optische Element in einer erfindungsgemäßen Einrichtung zur Laserstrahlablenkung vorgesehen bzw. einsetzbar. Vorteile und Merkmale des erfindungsgemäßen optischen Elements gelten auch für die erfindungsgemäße Laserstrahlablenkeinrichtung und umgekehrt.

Gemäß einem weiteren Aspekt der Erfindung wird ein Verfahren zur Laserstrahlablenkung angegeben, bei dem ein einfallender Laserstrahl durch ein optisches Element nacheinander in mindestens zwei unterschiedliche Richtungen abgelenkt wird, wobei eine vorgeschaltete Umlenkeinheit rotiert, und wobei der zur Rotationsachse seitlich parallel versetzt einfallende Laserstrahl während einer Rotation jeweils für eine Zeitdauer t auf mindestens zwei Segmente des optischen Elements trifft und jedes Segment den Laserstrahl während der Zeitdauer t in genau eine definierte Richtung ablenkt, wobei die Richtung des abgelenkten Laserstrahls während der Zeitdauer t konstant ist.

Durch das erfindungsgemäße Verfahren können insbesondere extrem leistungsstarke Laser bzw. Pulslaser mit beliebig hohen Pulswiederholraten in optischen Messsystemen verwendet werden und die Abtastfrequenz der einzelnen Messpositionen kann dabei beispielsweise mehrere hundert Hertz betragen. Im Übrigen gelten die Vorteile und Merkmale, die in Bezug auf die erfindungsgemäße Einrichtung und das erfindungsgemäße optische Element genannt sind, auch für das erfindungsgemäße Verfahren.

Vorteilhafterweise wird das Verfahren mit einer erfindungsgemäßen Einrichtung durchgeführt.

Nachfolgend wird die Erfindung anhand der Figuren beispielhaft beschrieben, in denen

Fig. 1 eine Laserstrahlablenkeinrichtung gemäß einer bevorzugten Ausführungsform der Erfindung schematisch in perspektivischer Darstellung zeigt;

Fig. 2 eine Schnittansicht der in Fig. 1 gezeigten Einrichtung schematisch darstellt;

Fig. 3a - 3d Vorderansichten von erfindungsgemäßen optischen Elementen verschiedener bevorzugter Ausführungsformen schematisch darstellen;

Fig. 4 eine schematische Seitenansicht der erfindungsgemäßen Einrichtung gemäß einer weiteren bevorzugten Ausführungsform zeigt;

Fig. 5 eine perspektivische Darstellung des in Fig. 4 verwendeten optischen Elements schematisch darstellt;

Fig. 6 eine andere Ausführungsform der erfindungsgemäßen Laserstrahlablenkeinrichtung in einer Seitenansicht schematisch zeigt, bei der der Laserstrahl von der Symmetrieachse weg abgelenkt wird;

Fig. 7 eine besonders bevorzugte Ausführungsform der erfindungsgemäßen Einrichtung mit einem gekrümmten Flächenelement in einer Seitenansicht schematisch zeigt;

Fig. 8a und 8b eine weitere bevorzugte Ausführungsform der Erfindung mit einem abgeflachten optischen Element schematisch zeigen;

Fig. 9a und 9b eine noch weitere bevorzugte Ausführungsform der Erfindung mit einem an einer Seite ausgesparten optischen Element zeigen;

Fig. 10 eine erfindungsgemäße Einrichtung mit einem reflektierenden optischen Element in einer Seitenansicht schematisch zeigt;

Fig. 11 eine erfindungsgemäße Einrichtung mit einem reflektierenden optischen Element und Strahlablenkung von der Symmetrieachse weg in einer Seitenansicht schematisch zeigt;

Fig. 12 eine Schnittansicht einer erfindungsgemäßen Laserstrahlablenkeinrichtung mit einem optischen Element schematisch zeigt; und

Fig. 13 ein optisches Element gemäß einer besonders bevorzugten Ausführungsform der Erfindung schematisch in perspektivischer Darstellung zeigt.

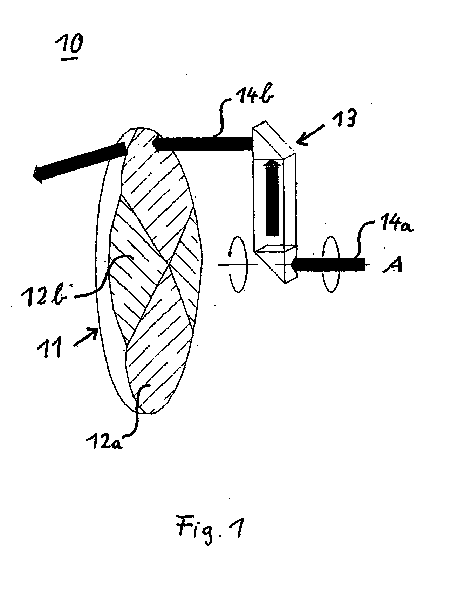

Fig. 1 zeigt eine erfindungsgemäße Laserablenkeinheit bzw. -einrichtung 10 zur Laserstrahlablenkung für optische Messsysteme gemäß einer bevorzugten Ausführungsform der Erfindung. Die Einrichtung 10 umfasst ein optisches Element 11 mit mehreren Segmenten 12a, 12b, die keilförmig gestaltet sind. Das optische Element 11 ist in Form einer runden Scheibe ausgestaltet, wobei die einzelnen Segmente 12a, 12b der Scheibe in radialer Richtung geneigte Oberflächen aufweisen.

Eine Umlenkeinheit 13 in Form einer rotierbaren Optik ist dem feststehenden optischen Element 11 vorgeschaltet und dient dazu, einen Laserstrahl 14a seitlich zu versetzen und den versetzten Laserstrahl 14b in eine Kreisbewegung zu bringen, wobei die Strahlachse parallel zur ursprünglichen Strahlachse gerichtet ist. Somit beschreibt der seitlich versetzte Laserstrahl 14b nach Durchlaufen der rotierenden Umlenkeinheit 13 die Mantelfläche eines Zylinders bzw. eine Kreisbewegung in Zylinderform. Die Form des optischen Elements 11, das beispielsweise auch als ringförmiger Scheibenausschnitt ausgestaltet sein kann und vorzugsweise auf seiner Vorderseite bzw. Strahleintrittsseite in die einzelnen Segmente 12a, 12b unterteilt ist, ist im Seitenschnitt für jedes dieser Segmente 12a, 12b keilförmig. Dabei besitzt jedes Segment 12a, 12b einen eigenen Keilwinkel mit eigener Ausrichtung.

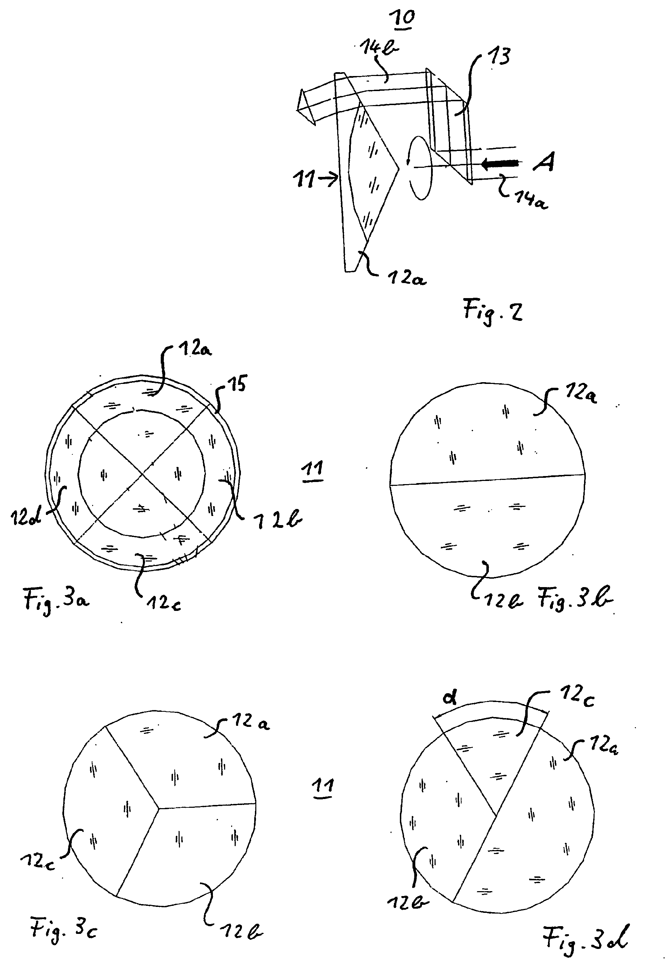

Fig. 2 zeigt die erfindungsgemäße Einrichtung 10 im Seitenschnitt. Die Keilform der einzelnen Segmente 12a, 12b bewirkt, dass der einfallende Laserstrahl 14b, der jeweils innerhalb eines Segments auf das optische Element 11 trifft, an den Oberflächen der keilförmigen Segmente 12a, 12b nacheinander in die verschiedenen gewünschten Richtungen gebrochen wird. Jede durch ein einzelnes Segment 12a, 12b verursachte Richtung des Laserstrahls wird beim Wandern des einfallenden Laserstrahls 14b über eine Segmentfläche exakt beibehalten. Die einzelnen Keile bzw. Segmente 12a, 12b sind in diesem Beispiel Prismen.

Die Umlenkeinheit 13, die rotierend gelagert ist und durch eine in den Figuren nicht dargestellte Antriebseinheit in Rotation versetzt wird, enthält zur Strahlumlenkung Spiegel, beispielsweise metallischer oder dielektrischer Art, als Umlenkflächen, an denen der Laserstrahl 14a durch Reflexion seitlich versetzt wird. Es können aber auch Prismen unter Verwendung der Totalreflexion an den Umlenkflächen verwendet werden. Bei Verwendung von Prismen kann die rotierende Optik bzw. Umlenkeinheit 13 auch als transparenter Monolith ausgebildet sein.

Nach Durchlaufen der im Betrieb rotierenden Umlenkeinheit 13 trifft der zylindrisch kreisende Laserstrahl 14b auf das feststehende, optisch transparente optische Element 11, dessen spezielle Form den Laserstrahl in die gewünschte Richtung bricht.

Die Figuren 3a - 3d zeigen das optische Element 11 in verschiedenen Ausführungsformen in einer Ansicht von vorne.

In Fig. 3a enthält das als runde Scheibe ausgebildete optische Element 11 an seiner Strahleintrittsseite bzw. Vorderseite oder Rückseite eine Fläche, die in vier Teilsegmente 12a, 12b, 12c, 12d unterteilt ist. Der im Wesentlichen senkrecht auf die Vorderseite des optischen Elements 11 auftreffende Laserstrahl 14b beschreibt eine Kreisbahn 15 im Randbereich des optischen Elements 11, wobei der einfallende Laserstrahl 14b nacheinander auf die einzelnen Segmente 12a, 12b, 12c, 12d trifft und durch diese in verschiedene Richtungen im Raum abgelenkt wird. Dabei hat jedes Segment 12a, 12b, 12c, 12d einen festen Ablenkwinkel im Raum, so dass der abgelenkte Laserstrahl 14c während einer Zeitdauer t in seiner Raumrichtung konstant bleibt, d.h. so lange der einfallende Laserstrahl 14b von dem entsprechenden Segment abgelenkt wird.

In der Figur 3b ist das optische Element 11 gleichmäßig in zwei Teilsegmente 12a, 12b unterteilt, während es in Fig. 3c gleichmäßig in drei Teilsegmente 12a, 12b, 12c unterteilt ist.

In Fig. 3d ist das optische Element 11 mit einer Unterteilung in Segmente 12a, 12b, 12c gezeigt, die jeweils einen unterschiedlichen Winkelbereich des optischen Elements 11 einnehmen. Dadurch wird bei konstanter Kreisgeschwindigkeit bzw. Rotationsgeschwindigkeit eine unterschiedliche Verweildauer des abgelenkten Laserstrahls in den einzelnen Messpositionen erreicht. Der Segmentwinkel $\alpha$ eines Segments 12a, 12b, 12c, 12d legt zusammen mit der Rotationsfrequenz F in Hertz die Verweildauer bzw. Messzeit $T_m$ in Sekunden pro Richtung fest. Dabei gilt:

$$T_m = \frac{\alpha}{(360° \cdot F)} \qquad (1)$$

Das Umschalten von einer Ablenkungsrichtung zur nächsten erfolgt nicht spontan, sondern entspricht einem Überblenden. Die Überblenddauer $T_ü$ hängt vom Laserstrahldurchmesser $D_L$, von der Rotationsfrequenz F in Hertz und vom Durchmesser der Kreisbahn $D_K$ ab, den der Laserstrahl 14b auf dem optischen Element 11 beschreibt. Dabei gilt näherungsweise folgender Zusammenhang:

$$T_ü = \frac{D_L}{(D_K \cdot \Pi \cdot F)} \qquad (2)$$

Die Anzahl der Scheiben- oder Ringsegmente bestimmt die Anzahl der Messpositionen der optischen Messeinrichtung, in der die Laserablenkungseinrichtung verwendet wird. Beispielsweise müssen bei zwei Positionen demnach mindestens zwei Segmente ausgebildet sein, bei drei Positionen mindestens drei, usw..

Der Ablenkwinkel jedes Segments 12a, 12b, 12c, 12d hängt nur vom Keilwinkel und der Neigung des keilförmigen Segments ab. Daher ist die Genauigkeit des Ablenkwinkels nur durch Fertigungstoleranzen bestimmt und verhält sich zeitlich stabil. Bei der Realisierung kann eine gegebenenfalls durch Lagerspiel vorhandene Winkelvariation der rotierenden Elemente durch geeignete Auswahl der Lager vernachlässigbar klein gehalten werden.

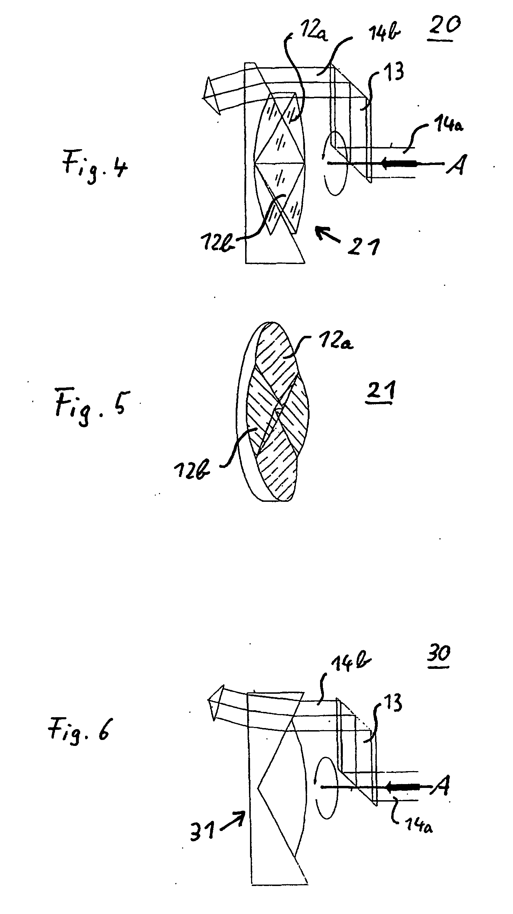

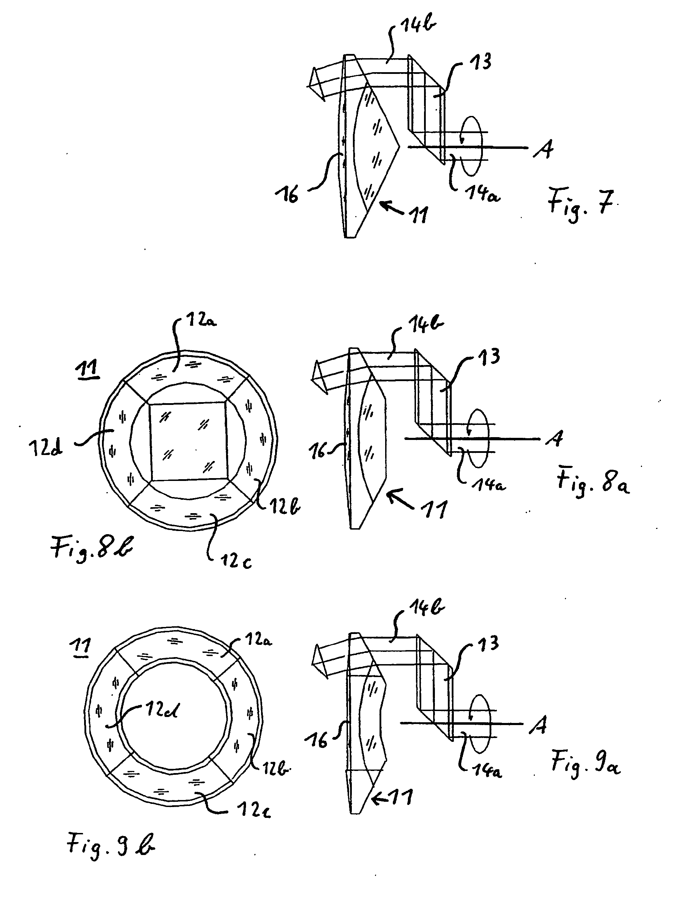

In Fig. 4 ist eine Einrichtung zur Strahlumlenkung 20 gemäß einer weiteren bevorzugten Ausführungsform der Erfindung gezeigt, mit einem optischen Element 21, bei dem mehrere Segmente 12a, 12b eine Ablenkung in der gleichen Richtung bewirken. Das optische Element 21 ist in Fig. 5 schematisch in perspektivischer Darstellung gezeigt. Bei dieser Ausführungsform erfolgt während einer Umdrehung ein zweimaliges Ablenken des Laserstrahls in dieselbe Richtung.

Fig. 6 zeigt eine weitere Ausführungsform der Erfindung mit einer Einrichtung zur Strahlablenkung 30, deren optisches Element 31 eine Strahlablenkung von der Symmetrie- bzw. Rotationsachse A weg bewirkt. Demgegenüber hat jedoch die in den vorhergehenden Figuren gezeigte Strahlablenkung zur Rotationsachse A hin den Vorteil, dass der für die Laserstrahlung genutzte Raum im Strahlengang nach der Optik kleiner gehalten werden kann um beispielsweise ein kleineres optisches Austrittsfenster zu ermöglichen. Dies ist insbesondere auch in Fahrzeugen oder Flugzeugen vorteilhaft.

Durch die Keilform der einzelnen Segmente 12a, 12b, 12c, 12d durchläuft der Laserstrahl unterschiedliche Dicken des jeweiligen Segments. Dies führt zu einem seitlichen Versatz des abgelenkten Laserstrahls, wobei der Versatz in etwa der Segmentbreite am Ort der Kreisbewegung entspricht. Bei diesem Versatz bleibt der abgelenkte Laserstrahl parallel.

Die Figuren 7, 8a und 9a zeigen weitere Ausführungsformen, bei denen der seitliche Versatz korrigiert wird, wenn er sich bei hoher Anforderung an die exakte Lage des gewünschten Messpunkts störend auswirkt. Dabei ist eine Seite des optischen Elements 11, im hier gezeigten Fall die Rückseite bzw. Strahlaustrittsseite, als sphärische oder asphärische Fläche ausgebildet. Zu diesem Zweck befindet sich auf der Rückseite des optischen Elements 11 ein sphärisch oder asphärisch ausgebildetes Flächenelement 16. Um eine exakte Versatzkorrektur zu erreichen, bildet der Radius dieser Sphäre oder Asphäre eine positive Brennweite, die genau dem Abstand zur Messposition entspricht. Da alle parallelen Strahlen in diesem Brennpunkt gebündelt werden, werden auch alle Versatzfehler hierdurch korrigiert.

Bei den in Figuren 8a, 8b, 9a, 9b gezeigten Ausführungsformen ist der zentrale Bereich des optischen Elements 11 abgeflacht (Figuren 8a, 8b) bzw. ausgespart (Figuren 9a, 9b). Hierdurch wird eine weitere Gewichtsreduzierung und Miniaturisierung der Einrichtung erreicht. Die Abflachung bzw. Aussparung ist möglich, da nur der Bereich, der vom Laserstrahl durchdrungen wird, die keilförmige bzw. sphärische oder asphärische Form besitzen muss.

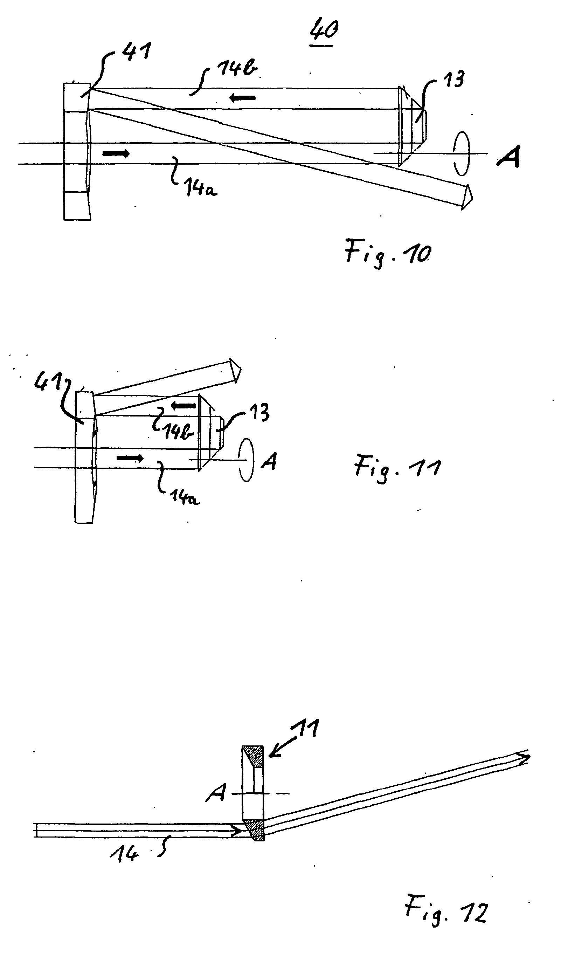

Die Figuren 10 und 11 zeigen eine Einrichtung 40 als weitere mögliche Ausführungsform der Erfindung, mit einem optischen Element 41, das den einfallenden Laserstrahl 14b reflektiert. Dazu haben die einzelnen Segmente des optischen Elements 41 spiegelnde Oberflächen mit einem möglichst hohen Reflexionsgrad für Laserwellenlängen auf der dem einfallenden Laserstrahl zugewandten Seite. Ebenso wie bei den oben beschriebenen Ausführungsformen kann auch hier eine Ablenkung des Laserstrahls zur Symmetrie- bzw. Rotationsachse A hin erfolgen (Fig. 10), oder auch eine Ablenkung von der Symmetrie- bzw. Rotationsachse A weg erfolgen (Fig. 11), oder durch geeignete Segmente beides kombiniert werden.

Bei der in Fig. 12 dargestellten Ausführungsform ist die Oberflächenform des optischen Elements 11 komplexer, d.h. nicht mehr nur keilförmig mit planen Flächen ausgeführt, sondern je nach Ablenkrichtung sphärisch, asphärisch, beispielsweise auch parabolisch, elliptisch oder wendelförmig. Eine u.U. vorhandene und ggf. störende Strahlverformung durch derartige gekrümmte Oberflächen ist insbesondere bei Anwendungen in kurzer Entfernung und bei relativ kleinen Ablenkwinkeln oder auch kleinen Strahldurchmessern nicht störend. Vorzugsweise wird diese Ausführungsform in Fällen verwendet, in denen nur Ablenkrichtungen einer Raumachse, d.h. horizontal oder vertikal, benötigt werden, die eine Ebene aufspannen.

Ähnlich wie in den oben beschriebenen Ausführungsformen ist auch hier eine Ablenkung durch Reflexion auf dem optischen Element 11 möglich. D.h., die Optik zur Ablenkung ist in diesem Fall nicht transparent, sondern verspiegelt.

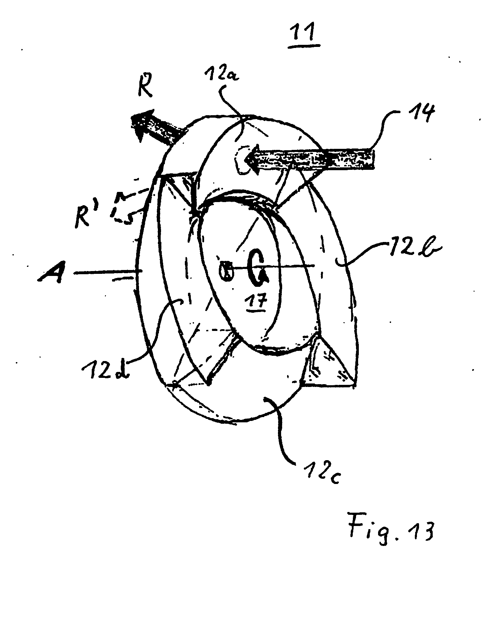

Fig. 13 zeigt das optische Element 11, das zum Ablenken des einfallenden Laserstrahls 14 wendelartig oder kegelartig ausgeformte Segmente 12a, 12b, 12c, 12d aufweist. Das optische Element 11 ist ringförmig gestaltet, wobei die einzelnen Segmente 12a, 12b, 12c, 12d, die als Kegel oder Wendel ausgestaltet sind, im Bereich der Kreisbahn des auftreffenden Laserstrahls 14 ausgebildet sind. In seinem zentralen Bereich 17 hat das optische Element 11 eine Aussparung zur Gewichtsreduzierung.

Die dem einfallenden Laserstrahl zugewandte Seite jedes Segments 12a, 12b, 12c, 12d ist in Umfangsrichtung geneigt, wobei die Oberfläche jedes Segments 12a, 12b, 12c, 12d in einer Umfangsrichtung stetig ansteigt. Während der einfallende Laserstrahl 14 eines der Segmente 12a überstreicht, wird er durch dieses Segment konstant in eine Richtung R abgelenkt. Beim Auftreffen auf das nachfolgende Segment 12b erfolgt eine Richtungsänderung des abgelenkten Laserstrahls in die Richtung R'. Diese Richtung R' bleibt wiederum konstant, bis der Laserstrahl aufgrund der Rotationsbewegung auf das nächste Segment 12c trifft, usw..

**Patentansprüche**

1. Einrichtung zur Laserstrahlablenkung für optische Messsysteme, mit einem optischen Element (11;21: 31; 41) zur Ablenkung eines einfallenden Laserstrahls (14; 14b); und

   einer Antriebseinheit zur Erzeugung einer Rotationsbewegung zwischen dem optischen Element (11; 21; 31; 41) und dem einfallenden Laserstrahl (14; 14b):

   **gekennzeichnet durch**

   eine rotierbare Umlenkeinheit (13), die dem optischen Element (11; 21; 31; 41) in Strahlrichtung vorgeschaltet und an die Antriebseinheit gekoppelt ist, um den einfallenden Laserstrahl (14a) vor seinem Auftreffen auf das optische Element (11; 21: 31; 41) seitlich parallel zu versetzen und in eine Kreisbahn zu bringen;

   wobei die rotierbare Umlenkeinheit derart angeordnet ist, dass der Laserstrahl (14; 14b) die Kreisbahn auf der Oberfläche des optischen Elements (11; 21; 31; 41) ausführt;

   und wobei das optische Element (11; 21; 31; 41) mindestens zwei Segmente (12a, 12b, 12c, 12d) umfasst, die derart gestaltet sind, dass der auftreffende Laserstrahl (14; 14b) **durch** die Segmente (12a, 12b, 12c, 12d) nacheinander in verschiedene definierte Richtungen (R, R) abgelenkt wird, wobei während des Auftreffens des Laserstrahls (14; 14b) auf das jeweilige Segment (12a, 12b, 12c, 12d) die Richtung (R. R) des abgelenkten Laserstrahls konstant ist.

2. Einrichtung nach Anspruch 1, **dadurch gekennzeichnet, dass** das optische Element (11; 21; 31; 41) Scheiben- oder ringförmig ausgestaltet ist.

3. Einrichtung nach einem der vorhergehenden Ansprüche, **dadurch gekennzeichnet, dass** die Segmente (12a, 12b, 12c, 12d) des optischen Elements (11; 21; 31; 41) ebene Oberflächen aufweisen, die gegenüber der Strahlachse des einfallenden Laserstrahls geneigt sind, wobei der Neigungswinkel jedes Segments (12a, 12b, 12c, 12d) dessen Ablenkwinkel definiert.

4. Einrichtung nach einem der vorhergehenden Ansprüche, **dadurch gekennzeichnet, dass** die Segmente (12a, 12b, 12c, 12d) derart gestaltet sind, dass der einfallende Laserstrahl (14; 14b) zur Rotationsachse (A) hin abgelenkt wird.

5. Einrichtung nach einem der vorhergehenden Ansprüche, **dadurch gekennzeichnet, dass** mehrere Segmente (12a, 12b. 12c. 12d) gleich ausgestaltet sind, um während der Rotationsbewegung den Laserstrahl (14; 14b) mehrmals in ein und dieselbe definierte Richtung abzulenken.

6. Einrichtung nach einem der vorhergehenden Ansprüche, **dadurch gekennzeichnet, dass** zwischen zwei aneinandergrenzenden Segmenten (12a, 12b, 12c, 12d) ein Obergangsbereich vorhanden ist, der eine Richtungsänderung des Laserstrahls ohne Strahlunterbrechung ermöglicht.

7. Einrichtung nach einem der vorhergehenden Ansprüche, **dadurch gekennzeichnet, dass** das optische Element (11) an einer Seite ein sphärisch oder asphärisch ausgebildetes Flächenelement (16) mit einer positiven Brennweite aufweist.

8. Einrichtung nach einem der vorhergehenden Ansprüche, **dadurch gekennzeichnet, dass** das optische Element (11; 21; 31; 41) in einem nicht zur Strahlablenkung genutzten Teilbereich abgeflacht ist oder eine Aussparung aufweist.

9. Einrichtung nach einem der vorhergehenden Ansprüche, **dadurch gekennzeichnet, dass** das optische Element (11; 21; 31; 41) transparent ist, wobei der jeweilige Ablenkwinkel durch Lichtbrechung in den Segmenten (12a, 12b, 12c, 12d) erzeugt wird.

10. Einrichtung nach einem der vorhergehenden Ansprüche, **dadurch gekennzeichnet, dass** das optische Element (11; 21; 31; 41) reflektierend ist, wobei der jeweilige Ablenkwinkel durch Reflexion an den Segmenten (12a, 12b, 12c, 12d) erzeugt wird.

11. Einrichtung nach einem der vorhergehenden Ansprüche, **dadurch gekennzeichnet, dass** die Verweildauer des abgelenkten Laserstrahls in einer definierten Raumrichtung in Abhängigkeit vom Winkelbereich des jeweiligen Segments (12a, 12b, 12c, 12d) und der Rotationsfrequenz bestimmt ist.

**12.** Verfahren zur Laserstrahlablenkung in optischen Messsystemen, bei dem ein einfallender Laserstrahl (14; 14b) durch ein optisches Element (11; 21; 31; 41) nacheinander in mindestens zwei unterschiedliche Richtungen (R, R') abgelenkt wird, wobei
der Laserstrahl (14; 14b) jeweils für eine Zeitdauer (t) auf mindestens zwei Segmente (12a, 12b, 12c, 12d) des optischen Elements (11;21;31;41) trifft,
wobei jedes Segment (12a, 12b, 12c, 12d) den Laserstrahl (14;14b) während der Zeitdauer (t) in genau eine definierte Richtung (R, R') ablenkt,
**dadurch gekennzeichnet, dass**
der Laserstrahl (14; 14b) vor dem Auftreffen auf das optische Element (11; 21; 31; 41) mittels einer rotierenden Umlenkeinheit (13) seitlich parallel versetzt wird und eine Kreisbahn ausführt wobei die Strahlachse parallel zur ursprünglichen Strahlachse gerichtet ist, und wobei die Richtung (R, R) des abgelenkten Laserstrahls während der Zeitdauer (t) konstant ist.

**13.** Verfahren nach Anspruch 12, **dadurch gekennzeichnet, dass** es mit einer Einrichtung nach einem der Ansprüche 1 bis 11 durchgeführt wird.


**Claims**

**1.** A device for laser-beam deflection for optical measuring systems, having an optical element (11; 21; 31; 41) for deflecting an incident laser beam (14; 14b); and a drive unit for producing a rotational movement between the optical element (11; 21; 31; 41) and the incident laser beam (14; 14b);
**characterised by**
a rotatable deflecting unit (13) that is connected upstream of the optical element (11; 21; 31; 41) in the beam direction and is coupled to the drive unit in order to displace the incident laser beam (14a) laterally in parallel, before it strikes the optical element (11; 21; 31; 41), and bring it into an orbit;
with the rotatable deflecting unit being arranged in such a way that the laser beam (14; 14b) executes the orbit on the surface of the optical element (11; 21; 31; 41);
and with the optical element (11; 21; 31; 41) comprising at least two segments (12a, 12b, 12c, 12d) that are configured in such a way that the incident laser beam (14; 14b) is deflected by the segments (12a, 12b, 12c, 12d) successively in different defined directions (R, R'), with the direction (R, R') of the deflected laser beam being constant whilst the laser beam (14; 14b) is striking the respective segment (12a, 12b, 12c, 12d).

**2.** A device according to claim 1, **characterised in that** the optical element (11; 21; 31; 41) is configured in a disk- or ring-shaped manner.

**3.** A device according to one of the preceding claims, **characterised in that** the segments (12a, 12b, 12c, 12d) of the optical element (11; 21; 31; 41) have planar surfaces that are inclined in relation to the beam axis of the incident laser beam, with the angle of inclination of each segment (12a, 12b, 12c, 12d) defining the latter's angle of deflection.

**4.** A device according to one of the preceding claims, **characterised in that** the segments (12a, 12b, 12c, 12d) are configured in such a way that the incident laser beam (14; 14b) is deflected towards the axis of rotation (A).

**5.** A device according to one of the preceding claims, **characterised in that** several segments (12a, 12b, 12c, 12d) are configured in the same way in order to deflect the laser beam (14; 14b) several times into one and the same defined direction during the rotational movement.

**6.** A device according to one of the preceding claims, **characterised in that** provided between two adjoining segments (12a, 12b, 12c, 12d) there is a transition region that enables there to be a change in direction of the laser beam without interruption of the beam.

**7.** A device according to one of the preceding claims, **characterised in that** the optical element (11) on one side has a spherically or aspherically formed surface element (16) with a positive focal length.

**8.** A device according to one of the preceding claims, **characterised in that** the optical element (11; 21; 31; 41) is flattened or has a recess in a partial region that is not used for beam deflection.

**9.** A device according to one of the preceding claims, **characterised in that** the optical element (11; 21; 31; 41) is transparent, with the respective angle of deflection being generated by light refraction in the segments (12a, 12b, 12c, 12d).

10. A device according to one of the preceding claims, **characterised in that** the optical element (11; 21; 31; 41) is reflective, with the respective angle of deflection being generated by reflection at the segments (12a, 12b, 12c, 12d).

11. A device according to one of the preceding claims, **characterised in that** the dwell time of the deflected laser beam in a defined direction in space is determined as a function of the angular range of the respective segment (12a, 12b, 12c, 12d) and the rotational frequency.

12. A method for laser-beam deflection in optical measuring systems, in which an incident laser beam (14; 14b) is deflected successively in at least two different directions (R, R') by means of an optical element (11; 21; 31; 41), wherein
the laser beam (14; 14b) impinges on at least two segments (12a, 12b, 12c, 12d) of the optical element (11; 21; 31; 41) in each case for a period of time (t),
with each segment (12a, 12b, 12c, 12d) deflecting the laser beam (14; 14b) during the period of time (t) in precisely one defined direction (R, R'),
**characterised in that**
the laser beam (14; 14b), before striking the optical element (11; 21; 31; 41), is displaced laterally in parallel by means of a rotating deflecting unit (13) and executes an orbit, the beam axis being directed parallel to the original beam axis and the direction (R, R') of the deflected laser beam being constant during the period of time (t).

13. A method according to claim 12, **characterised in that** it is carried out with a device according to one of claims 1 to 11.

**Revendications**

1. Installation pour dévier un faisceau laser pour des systèmes optiques de mesure comportant un élément optique (11, 21, 31, 41) pour dévier un faisceau laser incident (14, 14b), et une unité d'entraînement pour générer un mouvement de rotation entre l'élément optique (11, 21, 31, 41) et le faisceau laser incident (14, 14b),
**caractérisée par**
une unité de déflection rotative (13) en amont de l'élément optique (11, 21, 31, 41) dans la direction des rayons et couplé à l'unité d'entraînement pour décaler parallèlement et latéralement, le faisceau laser incident (14a) avant son arrivée sur l'élément optique (11, 21, 31, 41), et le mettre sur une trajectoire circulaire,
l'unité de déflection rotative faisant décrire au faisceau laser (14, 14b) la trajectoire circulaire à la surface de l'élément optique (11, 21, 31, 41), et l'élément optique (11, 21, 31, 41) comportant au moins deux segments (12a, 12b, 12c, 12d) pour dévier le faisceau laser incident (14, 14b) par les segments (12a, 12b, 12c, 12d) successivement dans des directions différentes définies (R, R'), alors que pendant l'incidence du faisceau laser (14, 14b) sur le segment respectif (12a, 12b, 12c, 12d), la direction (R, R') du faisceau laser dévié reste constante.

2. Installation selon la revendication 1,
**caractérisée en ce que**
l'élément optique (11, 21, 31, 41) est en forme de plaque ou d'anneau.

3. Installation selon l'une quelconque des revendications précédentes,
**caractérisée en ce que**
les segments (12a, 12b, 12c, 12d) de l'élément optique (11. 21, 31, 41) ont des surfaces planes inclinées par rapport à l'axe du faisceau laser incident et l'angle d'inclinaison de chaque segment (12a, 12b, 12c, 12d) défini son angle de déflection.

4. Installation selon l'une quelconque des revendications précédentes,
**caractérisée en ce que**
les segments (12a, 12b, 12c, 12d) sont conçus pour que le faisceau laser incident (14, 14b) soit dévié par rapport à l'axe de rotation (A).

5. Installation selon l'une quelconque des revendications précédentes,
**caractérisée par**
plusieurs segments (12a, 12b, 12c, 12d) identiques pour être déviés plusieurs fois dans une seule et même direction pendant le mouvement de rotation du faisceau laser (14, 14b).

6. Installation selon l'une quelconque des revendications précédentes,
   **caractérisée par**
   une zone transitoire entre deux segments adjacents (12a, 12b, 12c, 12d) qui permet une variation de direction du faisceau laser sans coupure du faisceau.

7. Installation selon l'une quelconque des revendications précédentes,
   **caractérisée en ce que**
   l'élément optique (11) comporte sur un côté un élément de surface (16) sphérique ou asphérique avec une distance focale positive.

8. Installation selon l'une quelconque des revendications précédentes,
   **caractérisée en ce que**
   l'élément optique (11, 21, 31, 41) est aplati dans une zone partielle non utilisée pour la déviation du faisceau ou comporte une cavité.

9. Installation selon l'une quelconque des revendications précédentes,
   **caractérisée en ce que**
   l'élément optique (11, 21, 31, 41) est transparent et l'angle de déflection respectif est engendré par la réfraction de la lumière dans les segments (12a. 12b, 12c, 12d).

10. Installation selon l'une quelconque des revendications précédentes,
    **caractérisée en ce que**
    l'élément optique (11, 21, 31, 41) est réfléchissant et l'angle de déflection respectif est généré par la réflexion sur les segments (12a, 12b, 12c, 12d).

11. Installation selon l'une quelconque des revendications précédentes,
    **caractérisée en ce que**
    la durée de séjour du faisceau laser dévié dans une direction définie dans l'espace se détermine en fonction de la plage angulaire du segment respectif (12a, 12b, 12c, 12d) et de la fréquence de la rotation.

12. Procédé de déviation d'un faisceau laser dans des systèmes de mesure optiques selon lequel on dévie un faisceau laser incident (14, 14b) par un élément optique (11, 21, 31, 41) successivement suivant au moins deux directions différentes (R, R'), et

    - le faisceau laser (14, 14b) rencontre chaque fois une durée (t) au maximum de deux segments (12a, 12b, 12c, 12d) de l'élément optique (11, 21, 31, 4 1),
    - chaque segment (12a, 12b, 12c, 12d) déviant le faisceau laser (14, 14b) dans une direction (R, R') définie de manière précise pendant la durée (t),

    **caractérisé en ce que**
    le faisceau laser (14, 14b) avant d'arriver sur l'élément optique (11, 21, 31, 41) est décalé parallèlement en translation latérale par une unité de renvoi rotative (13) et exécute une trajectoire circulaire, l'axe du faisceau étant dirigé parallèle à l'axe initial du faisceau, et la direction (R, R') du faisceau laser dévié étant constante pendant la durée (t).

13. Procédé selon la revendication 12,
    **caractérisé en ce qu'**
    il est effectué à l'aide d'une installation selon l'une des revendications 1 à 11.

10

14b

13

12b

11

12a

14a

A

Fig. 1

Fig. 2

Fig. 3a

Fig. 3b

Fig. 3c

Fig. 3d

Fig. 4

Fig. 5

Fig. 6

Fig. 7

Fig. 8b

Fig. 8a

Fig. 9α

Fig. 9b

_40_

41

14b

13

14a

A

*Fig. 10*

41

13

14b

14a

A

*Fig. 11*

11

A

14

*Fig. 12*

Fig. 13